# EUROPEAN PATENT APPLICATION

(11) **EP 4 596 812 A1**
(43) Date of publication of application: **06.08.2025**
(21) Application number: 23871121.2
(22) Date of filing: 26.07.2023
(51) Int. Cl.: E04H 12/00, E04H 12/12, E04H 12/34, F03D 13/20

(54) **HYBRID TOWER WITH PREFABRICATED SELF-SUPPORTING ELEMENTS AND ASSEMBLY METHOD**

(30) Priority: 26.09.2022 ES 202230822
(71) Applicant: INGENIERÍA ZERO, S.L., 39004 Santander Cantabria (ES)
(72) Inventor: SAIZ GARCÍA, Sergio, 39004 Santander Cantabria (ES); LOREA ARNAL, Ana Irene, 39004 Santander Cantabria (ES)
(74) Representative: Schäfer, Matthias W.
(86) International application number: PCT/ES2023/070483
(87) International publication number: WO 2024/069026

(57) **Abstract**

Hybrid tower with prefabricated self-supporting elements and assembly method, suitable for supporting wind turbines, with a lower section made up of an even number of self-supporting voussoirs, prefabricated totally or partially of reinforced concrete and/or prestressed as two different conjugate types, inner and outer, located adjacent to each other alternately and joined to each other by superimposed flat fins with interspersed intermediate joints, vertically arranged on both sides and throughout the height of the self-supporting voussoirs, the body of the self-supporting voussoirs having a trapezoidal section that increases linearly from the top to the bottom, forming a lower end of each self-supporting voussoir substantially wider than the upper end.

Its main advantage is a great structural rigidity by having a trapezoidal section of the voussoirs, but with little weight, making them easy to transport, and eliminating supports for vertical maintenance during assembly, simplifying the assembly process.

## Description

The present specification relates, as its title indicates, to a hybrid tower with prefabricated self-supporting elements, suitable for supporting wind turbines, characterized in that it has a lower section made up of an even number of self-supporting voussoirs, prefabricated totally or partially of reinforced and/or prestressed concrete as two different conjugate types, some inside and some outside, located adjacent to each other alternately and joined to each other by flat fins superimposed with intermediate joints between them, vertically arranged on both sides and throughout the height of the self-supporting voussoirs, and the body of the self-supporting voussoir having a trapezoidal section that increases linearly from the top to the bottom, forming a lower end of each self-supporting voussoir substantially wider than the upper end.

### Field of the invention

The invention relates to the field of hybrid towers, which include at least one part made of prefabricated elements totally or partially of reinforced and/or prestressed concrete, with a variant of metal cores in the voussoirs.

### Current state of the art

Generally, towers made with prefabricated concrete elements are usually built by stacking frusto-conical rings and tensioning them vertically by means of cables. On some occasions, these frusto-conical rings are formed by several pieces called voussoirs joined laterally to each other. The voussoirs are prefabricated elements of reinforced concrete that are joined together forming a frusto-conical ring, or similar shape, and we will consider this in this specification. On many occasions the voussoirs also have to be tensioned together horizontally by means of cables or other mechanical joints. Examples of this type of construction can be found, for example, described in E13197473 *"Prefabricated concrete voussoir, wind turbine tower comprising said voussoir, wind turbine comprising said tower and assembly method* of *said wind turbine."* WO2016156925 *"Wind turbine tower section, wind turbine tower, and assembly method",* ES2408330 *"Prefabricated modular tower"* or in ES2650070 *"Assembly method of concrete towers with a frusto-conical section".*

This type of voussoir presents the great problem that they need, during their assembly, auxiliary cranes, struts, or other types of structures or support means, to maintain each vertical piece while the others are being attached, since until the section with all the voussoirs is closed it cannot support itself on the ground or the foundation, as for example described in ES2435211 *"System for assembling a prefabricated concrete tower comprising a self-climbing telescopic crane"*

Another problem they present is that their shape, with a curved or flat section, has a reduced structural strength separately, requiring thick walls, which increases their weight and economic cost, and post-tensioning cables to reinforce them, both horizontally and vertically, to increase their structural strength, as for example described in WO03069099 *"Wind turbine"* or in ES2246734 *"Prefabricated modular tower".*

It is clear that, in the current state of the art, there are no known towers with self-supporting prefabricated concrete elements, configured as internal and external parts, and that they rest on each other partially allowing a mechanical joint that facilitates closure from the outside and does not require second assembly operations, such as concreting of the joints, or waiting times and in which the tolerance of the parts is not conditioning

### Description of the invention

To solve the current problem in the construction of hybrid towers, especially those for wind turbines, improving the current state of the art, the hybrid tower with self-supporting prefabricated elements object of the present invention has been devised, which is made up of at least one lower section made of prefabricated concrete elements, on which at least one upper section is raised, which can be metal or concrete, with a transition ring arranged between both sections, the entire set being supported on a foundation.

The section comprises an even number of self-supporting voussoirs, prefabricated totally or partially of reinforced and/or prestressed concrete and with a variant of metal cores in the voussoirs, of the same height as the height of the lower section, located alternately adjacent and joined to each other by flat fins superimposed with intermediate joints between them, vertically arranged on both sides and throughout the height of the self-supporting voussoirs with the self-supporting voussoirs being formed as two different models:
- inner voussoirs, whose flat fins are arranged close to the face of the inner voussoirs that faces the inside of the lower section of the tower, and
- outer voussoirs, whose flat fins are arranged close to the face of the outer voussoirs that faces the outside of the lower section of the tower,

the number of inner voussoirs being equal to the number of outer voussoirs,
said flat fins being arranged in such a way that, once the self-supporting voussoirs are located adjacently, alternating the inner and outer voussoirs to form the lower section, the flat fins are arranged on the flat fins in parallel and in sentient contact by means of the intermediate joints,
said flat fins having an inward inclination with respect to the body of the self-supporting voussoirs, and
the body of the self-supporting voussoirs having a trapezoidal section that increases linearly from the top to the bottom, forming a lower end of each self-supporting voussoir substantially wider than the upper end.

The joint between each flat fin of an inner voussoir, and its adjacent flat fin of an outer voussoir arranged thereon is preferably performed by mechanical means.

In the upper end of the lower section there is a transition ring, which can be made of prefabricated concrete, concreted "in situ", or metal, as a transition piece covering the upper end of the self-supporting voussoirs, and being the support of the upper section of the tower, which can be metal or also concrete.

The self-supporting voussoirs can have inward-facing recesses, at the top of their outermost wall, and also at the bottom of their outermost wall, as reinforcement of the ends in the contact zone with the transition ring and with the foundation respectively.

This tower involves a characteristic assembly method comprising
- a laying phase of the inner voussoirs,
- in case the joint between the flat fins involves the main or complementary use of chemical means, a placement phase of the chemical means on one or both sides of the flat fins intended to be in contact will be carried out,
- a laying phase of the outer voussoirs,
- an assembly phase of the prefabricated transition ring, hoisting it by means of a crane and covering the upper end of the self-supporting voussoirs, and
- an assembly phase of the upper section, lifting it by means of a crane and integrating it with the prefabricated transition ring.

The laying phase of the inner voussoirs, in turn, comprises
- a hoisting operation of the inner voussoirs, usually from a horizontal starting position on the ground, to a vertical position, at the appropriate distance and at their final location point on the foundation, using a crane only for hoisting, and subsequently leaving the inner voussoirs supported on their base, not needing any additional support since they are self-supporting, and
- a joining operation of the base of the inner voussoirs with the foundation, by conventional means.

The laying phase of the outer voussoirs, in turn, comprises:
- a hoisting operation of the external voussoirs from the horizontal starting position on the ground, to a vertical position, at their final location point on the foundation, and placing an external voussoir between every two previously placed internal voussoirs, using a crane only for hoisting, and subsequently leaving the external voussoirs supported on their base, and on the flat fins of the internal voussoirs, not needing any additional support since they are also self-supporting,
- in case the joining between the flat fins is performed by mechanical means, a joining operation between the flat fins will be performed by mechanical means, and
- a joining operation of the base of the outer voussoirs with the foundation, by conventional means.

### Advantages of the invention

This hybrid tower with prefabricated self-supporting elements that is presented provides multiple advantages over the systems currently available, the most important being that the voussoirs are self-supporting, not requiring scaffolding, supports, props or auxiliary cranes for their vertical maintenance during the assembly phases, simplifying the assembly process and making it faster and more cost-effective.

Another important advantage is the great structural rigidity obtained by having a trapezoidal section of the voussoirs, which eliminates the need for post-tensioning cables outside the voussoirs, both vertical and horizontal, with the consequent saving of construction time and simplification of the assembly method.

Also, as a result of the trapezoidal section of the voussoirs, a lower weight ratio is obtained for great rigidity of the pieces, making them easy to transport and handle.

Another advantage of the present invention is that the mechanical joint between the voussoirs facilitates the closure from the outside and does not require second assembly operations, such as the concreting of the joints in other types of towers, or waiting times and in which the tolerance of the parts is not conditioning.

It should also be noted that the assembly method of the voussoirs is very fast.

Likewise, another added advantage is that, since they are prefabricated concrete elements, mass production allows a further reduction in cost.

### Description of the figures

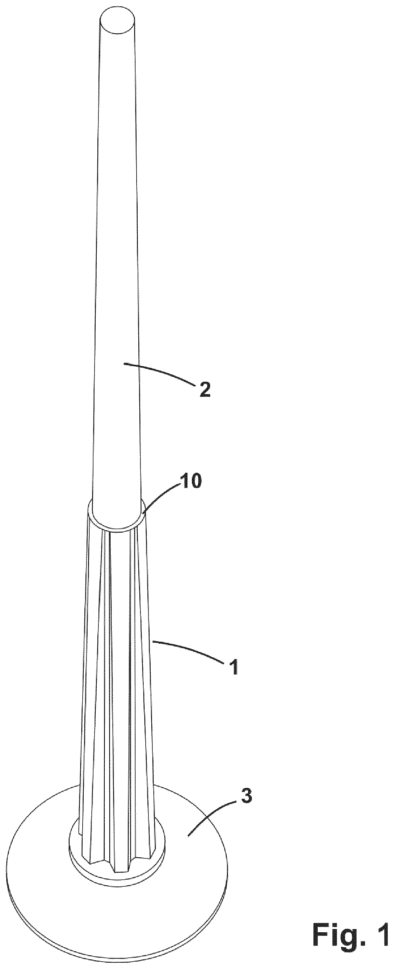

In order to better understand the object of the present invention, a preferential practical embodiment of a hybrid tower with self-supporting elements has been represented in the attached drawing.
In this drawing, figure 1 shows a perspective overview of an assembled hybrid tower, in an example with six voussoirs.
Figure 2 shows a side view of the lower part of the tower, with four enlarged details of sections at different heights, showing the increasing linear evolution of the width of the voussoirs, and therefore the variation of the plan of the tower, in an example with six voussoirs.
Figure 3 shows a perspective overview of an assembled tower with an enlarged detail of the prefabricated ring that is used as a transition piece between the lower section formed by the voussoirs, and the upper section, in an example with six voussoirs.
Figure 4 shows a perspective overview of the voussoirs joined together, before placing the prefabricated ring, showing in an enlarged detail the support between the inner and outer voussoirs, in an example with six voussoirs.
Figure 5 shows a detail of the mechanical joint between two voussoirs before being made, detailing its elements and a section view of the tower with the mechanical joints between voussoirs already made, in an example with six voussoirs.
Figure 6 shows enlarged details of a mechanical joint between two voussoirs, before and after being made, detailing its elements
Figure 7 shows three perspective views, from different angles, of the outer voussoirs.
Figure 8 shows three perspective views, from different angles, of the outer voussoirs.
Figure 9 shows a side view of the lower part of the tower, in the alternative embodiment with metal core, with three enlarged details of sections at different heights, showing the increasing linear evolution of the width of the voussoirs with metal core, and therefore the variation of the plan of the tower, and an enlarged detail of the inserts of corrugated sheet metal core in two adjacent voussoirs, in an example with six voussoirs.

### Preferred embodiment of the invention

The constitution and characteristics of the invention may be better understood with the following description made with reference to the attached figures.

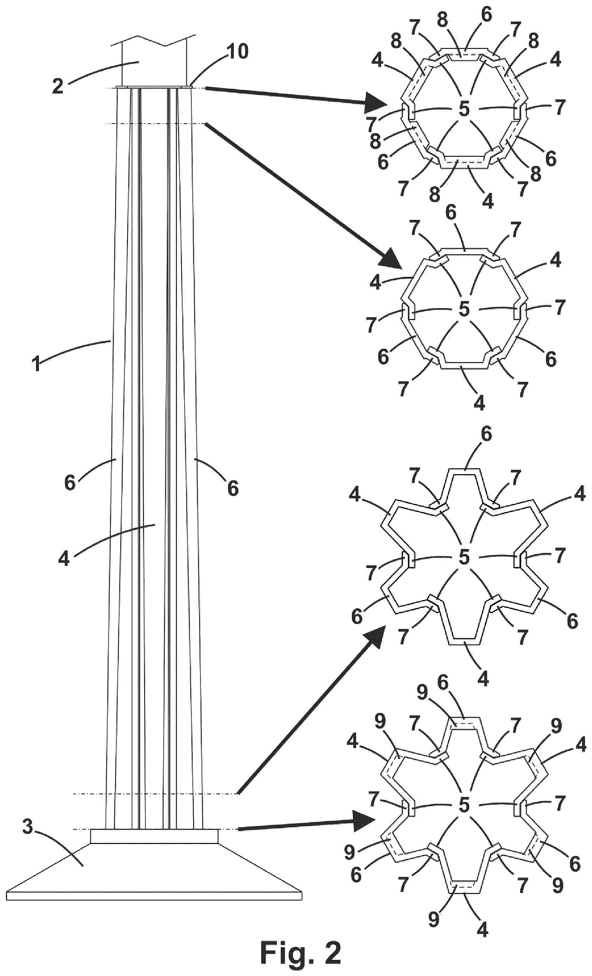

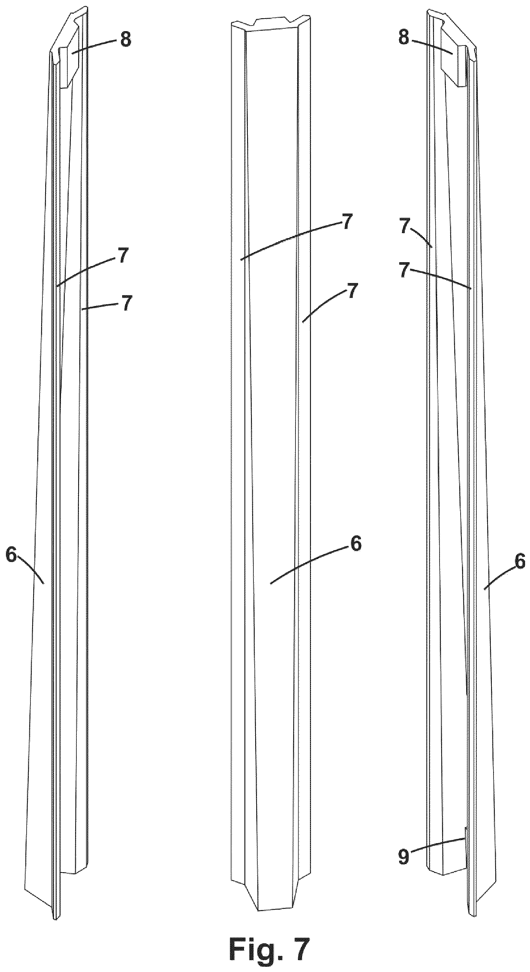

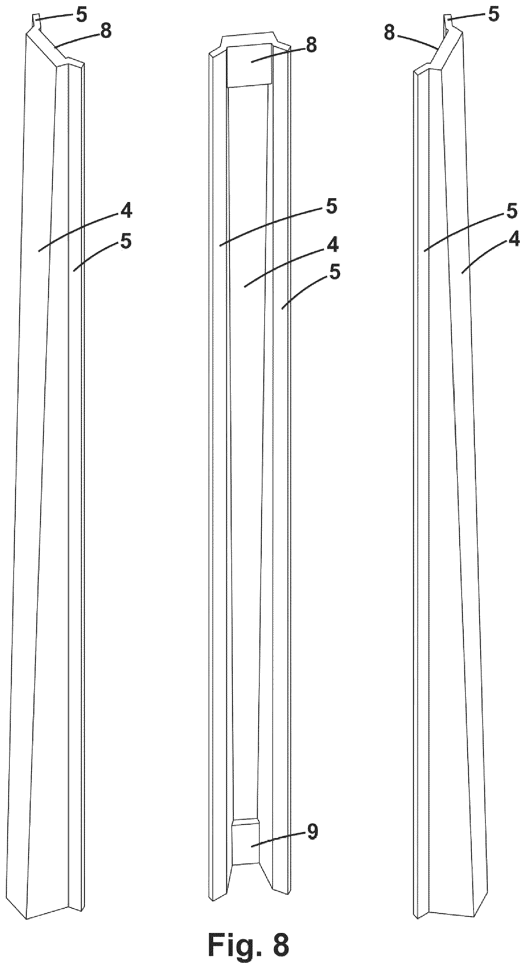

Figures 1, 2, 3, 4, 7, 8 and 9 illustrate how the hybrid tower with prefabricated self-supporting elements, suitable for supporting wind turbines, is made up of at least one lower section (1) made of prefabricated concrete elements, on which at least one upper section (2) rises, which can be metal or concrete, with a transition ring (10) arranged between both sections, the entire set being supported on a foundation (3).

The lower section (1), characteristic of the invention, comprises an even number of prefabricated self-supporting voussoirs (4,6) of reinforced and/or prestressed concrete, of the same height as the height of the lower section (1), located alternately adjacent and joined to each other by flat fins (5,7) superimposed with intermediate joints between them, vertically arranged on both sides and throughout the height of the self-supporting voussoirs (4,6), and the self-supporting voussoirs (4,6) being shaped as two different models:
- inner voussoirs (4), whose flat fins (5) are arranged close to the face of the inner voussoirs (4) that faces the inside of the lower section (1) of the tower, and
- outer voussoirs (6), whose flat fins (7) are arranged close to the face of the outer voussoirs (6) that faces the outside of the lower section (1) of the tower,

the number of inner voussoirs (4) being equal to the number of outer voussoirs (6),
said flat fins (5, 7) being arranged in such a way that, once the self-supporting voussoirs (4,6) are located adjacently, alternating the inner voussoirs (4) and the outer voussoirs (6) to form the lower section (1), the flat fins (7) are arranged on the flat fins (5) in a parallel way and in sentient contact by means of the intermediate joints,
said flat fins (5,7) having an inward inclination with respect to the body of the self-supporting voussoirs (4,6), and
the body of the self-supporting voussoirs (4,6) having a trapezoidal section that increases linearly from the top to the bottom, forming a lower end of each self-supporting voussoir (4,6) substantially wider than the upper end.

The number of self-supporting voussoirs (4,6) will always be even, having the same number of inner voussoirs (4) as of outer voussoirs (6).

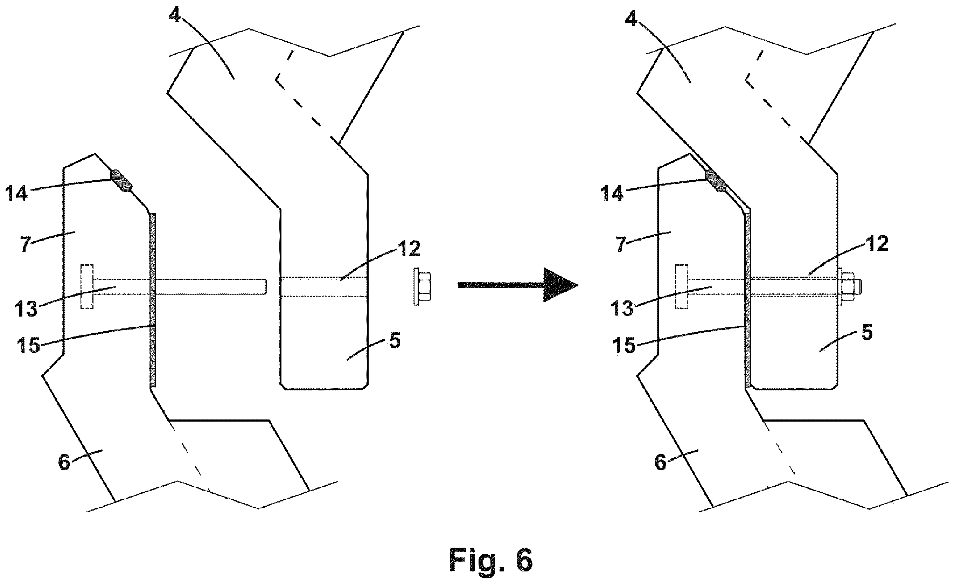

The intermediate joints arranged between each flat fin (5) of an inner voussoir (4) and its adjacent flat fin (7) of an outer voussoir (6), as illustrated in figure 6, are formed, for each pair of fins (5,7), at least by a support plate or band (15), arranged between both of them on the surface of greatest contact. This support plate or band (15) can optionally be complemented with a sealing joint (14), of elastic material, arranged between them in the groove resulting from the joint, in the part closest to the outside of the tower, to block the entry of moisture, rain or dirt into the joint. Both the support plates or bands (15) and the sealing joints (14) can be factory incorporated in the voussoirs (4,6), or alternatively attached before assembly.

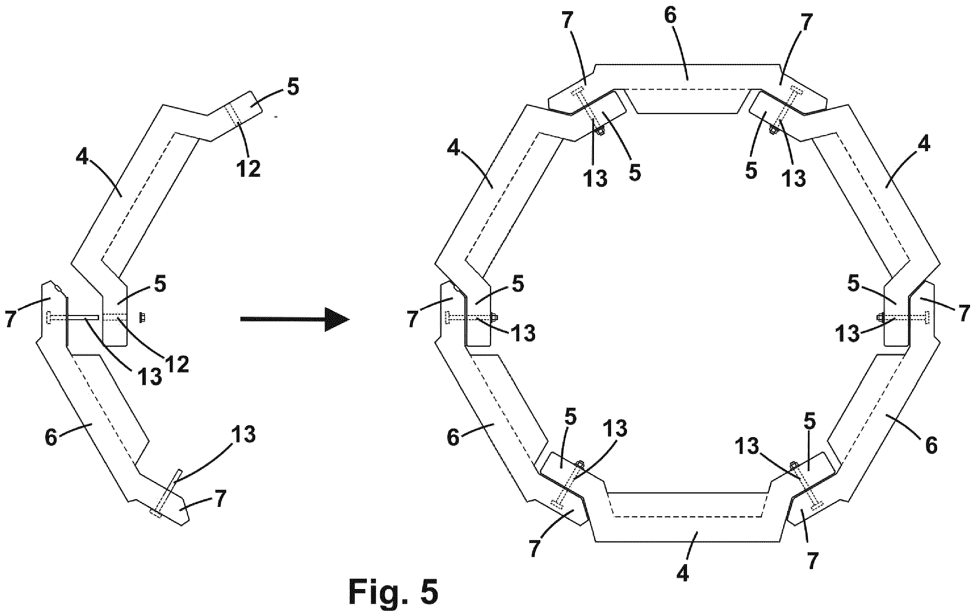

As illustrated in figures 5 and 6, the joint between each flat fin (5) of an inner voussoir (4), and its adjacent flat fin (7) of an outer voussoir (6) arranged thereon is preferably carried out by mechanical means (13) chosen from the group consisting of screws, nuts, threaded rods, and rivets. In a more preferred embodiment of the invention, a plurality of screws will be used, vertically arranged inside each flat fin (7) of the outer voussoirs (6), partially inserted in a supportive manner in the concrete, with the threaded part emerging towards the inside of the tower, and a plurality of through holes (12), vertically arranged in each flat fin (5) of the inner voussoirs (4), in position and height coincident with the screws. It is also envisaged that, alternatively or complementary to, the joint can be carried out by chemical means chosen from the group consisting of epoxy resins, cementitious materials and grouts.

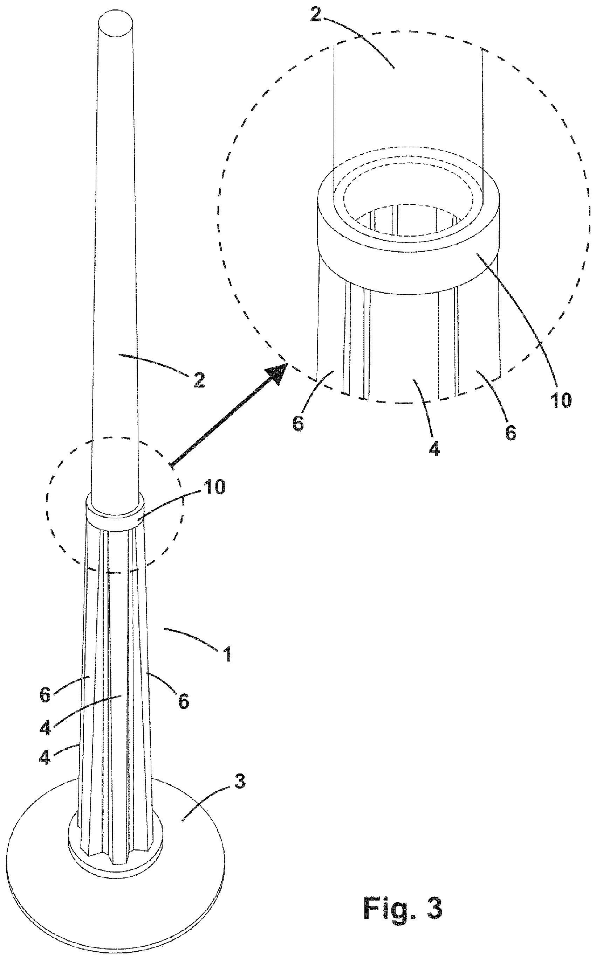

As illustrated in figure 3, at the upper end of the lower section (1) there is a transition ring (10), which can be prefabricated concrete, concreted "in situ", or metal, as a transition piece covering the upper end of the self-supporting voussoirs (4,6), and the support of the upper section (2). This ring functions as a transition piece between the lower section formed by the self-supporting voussoirs (4,6) and the upper section (2).

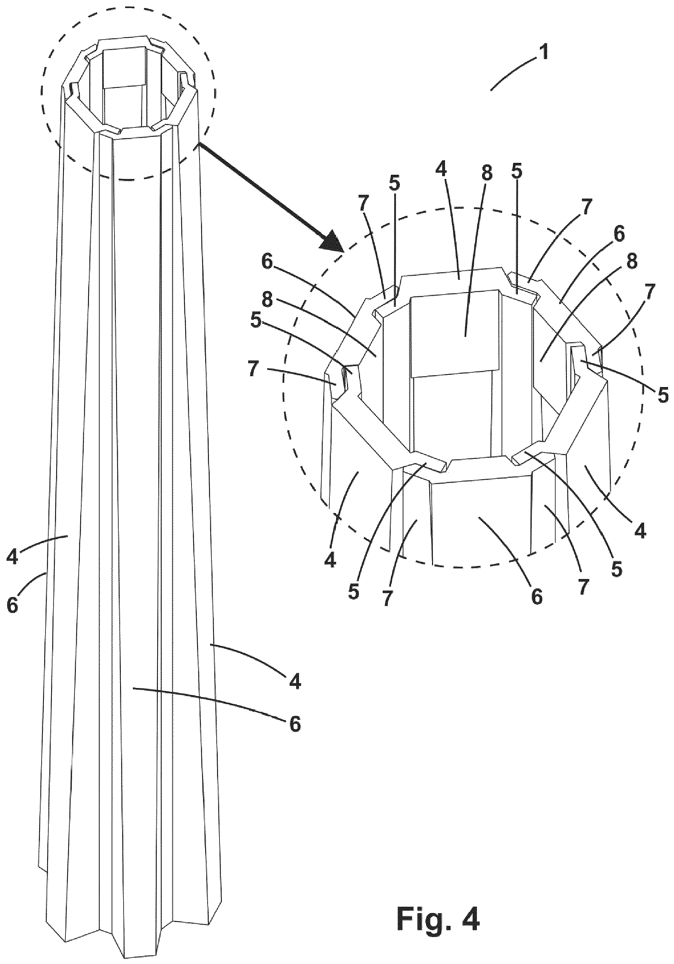

Figures 4, 7 and 8 particularly illustrate how the self-supporting voussoirs (4,6) have an inward-facing recess (8), in the upper part of their outermost wall, and also have an inward-facing recess (9), in the lower part of their outermost wall, as reinforcement of the ends in the contact zone with the prefabricated ring and with the foundation respectively.

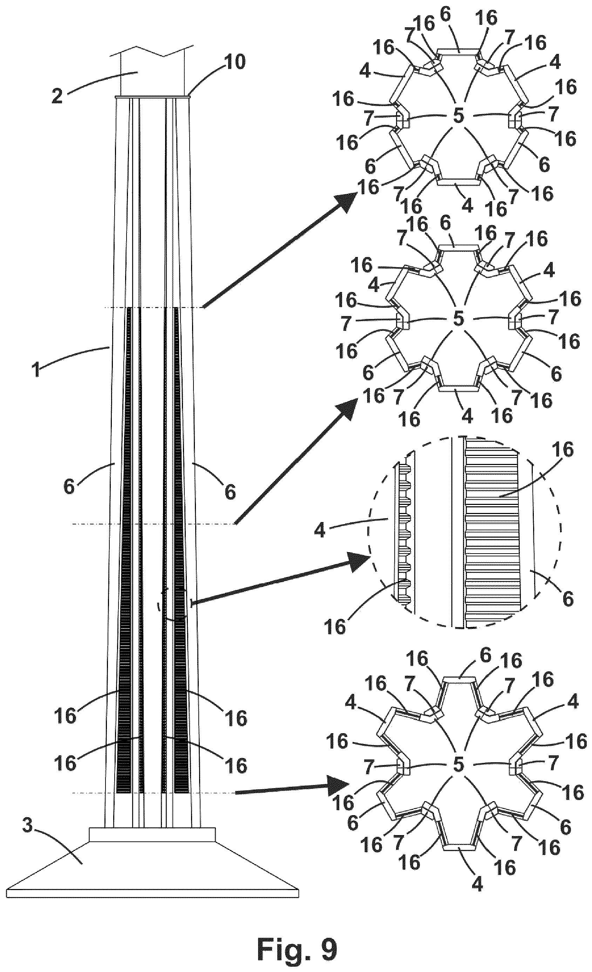

The preferred embodiment of the self-supporting voussoirs (4,6) is intended to be prefabricated entirely of concrete, although an alternative embodiment of the invention is also provided, as illustrated in figure 9, in which the concrete is combined with metal core parts (16), preferably of corrugated sheet metal, which are totally or partially inserted into the concrete of some of the side walls of the self-supporting voussoirs (4,6), making these walls formed of concrete and metal core, in order to lighten and cheapen their construction, without excessively reducing their structural strength. It is also envisaged that, also alternatively, self-supporting voussoirs (4,6) made entirely of concrete can be combined with self-supporting voussoirs (4,6) made with a metal core (16).

This tower involves a characteristic assembly method comprising
- a placement phase of the inner voussoirs (4),
- in the event that the joint between the flat fins (5,7) involves the main or complementary use of chemical means, a placement phase of the chemical means on one or both sides of the flat fins (5,7) intended to be in contact will be carried out,
- a laying phase of the outer voussoirs (6),
- an assembly phase the transition ring (10), hoisting it by means of a crane and covering the upper end of the self-supporting voussoirs (4,6), and
- an assembly phase of the upper section (2), hoisting it by means of a crane and integrating it with the transition ring (10).

The placement phase of the inner voussoirs (4), in turn, comprises
- a hoisting operation of the inner voussoirs (4), usually from a horizontal starting position on the ground, to a vertical position, at the appropriate distance and at their final location point on the foundation (3), using a crane only for hoisting, and subsequently leaving the inner voussoirs (4) supported on their base, not needing any additional support since they are self-supporting, and
- a joining operation of the base of the inner voussoirs (4) with the foundation (3), by conventional means.

The laying phase of the outer voussoirs (6), in turn, comprises:
- a hoisting operation of the outer voussoirs (6), usually from a horizontal starting position on the ground, to a vertical position, at their final location point on the foundation (3), and placing an outer voussoir (6) between every two inner voussoirs (4) previously placed, using a crane only for hoisting, and subsequently leaving the outer voussoirs (6) supported on their base, and on the flat fins (5) of the inner voussoirs (4), not needing any additional support since they are also self-supporting,
- in case the joint between the flat fins (5,7) is performed by mechanical means, a joining operation between the flat fins (5,7) will be performed by mechanical means, and
- a joining operation of the base of the outer voussoirs (6) with the foundation (3), by conventional means.

In the attached figures, a tower with a total number of six voussoirs, three inner voussoirs (4) and three outer voussoirs (6) has been exemplified, but the invention is equally applicable for any even number of the total voussoirs.

The person skilled in the art will easily understand that the characteristics of different embodiments can be combined with characteristics of other possible embodiments whenever such a combination is technically possible.

All the information referring to examples or modes of embodiment form part of the description of the invention.

## Claims

1. - Hybrid tower with prefabricated self-supporting elements, suitable for supporting wind turbines, formed by at least one lower section (1) made of prefabricated elements, on which rises at least one upper section (2), which can be metal or concrete, with a transition ring (10) arranged between both sections, the entire set being supported on a foundation (3), **characterized in that** the lower section (1) comprises an even number of prefabricated self-supporting voussoirs (4,6), of the same height as the height of the lower section (1), located alternately adjacent and joined to each other by flat fins (5,7) superimposed with intermediate joints between them, vertically arranged on both sides and throughout the height of the self-supporting voussoirs (4,6), and the self-supporting voussoirs (4,6) being formed as two different models:
- inner voussoirs (4), whose flat fins (5) are arranged close to the face of the inner voussoirs (4) that faces the inside of the lower section (1) of the tower, and
- outer voussoirs (6), whose flat fins (7) are arranged close to the face of the outer voussoirs (6) that faces the outside of the lower section (1) of the tower, the number of inner voussoirs (4) being equal to the number of outer voussoirs (6), said flat fins (5,7) being arranged in such a way that, once the self-supporting voussoirs (4,6) are located adjacently, the inner voussoirs (4) and the outer voussoirs (6) alternating to form the lower section (1), the flat fins (7) are arranged on the flat fins (5) in a parallel way and in sentient contact through the intermediate joints, said flat fins (5,7) having an inward inclination with respect to the body of the self-supporting voussoirs (4,6), and the body of the self-supporting voussoirs (4,6) having a trapezoidal section that increases linearly from the top to the bottom, forming a lower end of each self-supporting voussoir (4,6) substantially wider than the upper end.

2. - Hybrid tower with prefabricated self-supporting elements, according to the preceding claim, **characterized in that** the prefabricated self-supporting voussoirs (4,6) are made entirely of concrete.

3. - Hybrid tower with prefabricated self-supporting elements, according to claim 1, **characterized in that** all or some prefabricated self-supporting voussoirs (4,6) are made partially of concrete, including metal core parts (16) inserted totally or partially in the concrete of any of the side walls of the self-supporting voussoirs (4,6).

4. - Hybrid tower with prefabricated self-supporting elements, according to any of the preceding claims, **characterized in that** the intermediate joints arranged between the superimposed flat fins (5, 7) comprise a support plate or band (15), arranged between them on the surface with the greatest contact.

5. - Hybrid tower with prefabricated self-supporting elements, according to claim 4, **characterized in that** the intermediate joints arranged between the superimposed flat fins (5,7) comprise a sealing joint (14) arranged between them in the groove resulting from the joint, in the part closest to the outside of the tower.

6. - Hybrid tower with prefabricated self-supporting elements, according to any of the preceding claims, **characterized in that** the joint between each flat fin (5) of an inner voussoir (4), and its adjacent flat fin (7) of an outer voussoir (6) arranged on it is carried out by mechanical means chosen from the group consisting of screws, nuts, threaded rods, and rivets.

7. - Hybrid tower with prefabricated self-supporting elements, according to claim 6, **characterized in that** the joint between each flat fin (5) of an inner voussoir (4), and its adjacent flat fin (7) of an outer voussoir (6) arranged on it is carried out by means of a plurality of screws, vertically arranged inside each flat fin (7) of the outer voussoirs (6), partially inserted in the concrete in a supportive way, with the threaded part emerging towards the inside of the tower, and a plurality of through holes (12), vertically arranged in each flat fin (5) of the inner voussoirs (4), in position and height coinciding with the screws.

8. - Hybrid tower with prefabricated self-supporting elements, according to any of the preceding claims, **characterized in that** the joint between each flat fin (5) of an inner voussoir (4), and its adjacent flat fin (7) of an outer voussoir (6) arranged on it is carried out by chemical means, chosen from the group formed by epoxy resins, cementitious materials and grouts.

9. - Hybrid tower with prefabricated self-supporting elements, according to any of the preceding claims, **characterised in that** at the upper end of the lower section (1) there is a transition ring (10) covering the upper end of the self-supporting voussoirs (4,6), and the support of the upper section (2).

10. - Hybrid tower with prefabricated self-supporting elements, according to any of the preceding claims, **characterized in that** the self-supporting voussoirs (4,6) have an inward-facing recess (8), on top of its outermost wall.

11. - Hybrid tower with prefabricated self-supporting elements, according to any of the preceding claims, **characterized in that** the self-supporting voussoirs (4,6) have an inward-facing recess (9), at the bottom of their outermost wall.

12. - Assembly method of a hybrid tower with prefabricated self-supporting elements, according to any of the preceding claims, **characterized in that it** comprises
- a laying phase of the inner voussoirs (4), comprising
- a hoisting operation of the inner voussoirs (4), usually from a horizontal starting position on the ground, to a vertical position, at the appropriate distance and at their final location point on the foundation (3), using a crane only for hoisting, and subsequently leaving the inner voussoirs (4) supported on their base, not needing any additional support since they are self-supporting, and
- a joining operation of the base of the inner voussoirs (4) with the foundation (3), by conventional means.
- a placement phase of the outer voussoirs (6), comprising
- a hoisting operation of the outer voussoirs (6), usually from a horizontal starting position on the ground, to a vertical position, at their final location point on the foundation (3), and placing an outer voussoir (6) between every two inner voussoirs (4) previously placed, using a crane only for the hoisting, and subsequently leaving the outer voussoirs (6) supported on their base, and on the flat fins (5) of the inner voussoirs (4), not needing any additional support since they are also self-supporting, and
- a joining operation of the base of the outer voussoirs (6) with the foundation (3), by conventional means.
- an assembly phase of the transition ring (10), hoisting it by means of a crane and covering the upper end of the self-supporting voussoirs (4,6), and
- an assembly phase of the upper section (2), hoisting it by means of a crane and integrating it with the transition ring (10).

13. - Assembly method of a hybrid tower with prefabricated self-supporting elements, according to claim 12, **characterized in that** in case the joint between the flat fins (5,7) involves the main or complementary use of chemical means, a placement phase of the chemical means on one or both faces of the flat fins (5,7) intended to be in contact will be carried out before the placement phase of the outer voussoirs (6).

14. - Assembly method of a hybrid tower with prefabricated self-supporting elements, according to claim 12, **characterized in that** in the event that the joint between the flat fins (5,7) is carried out by mechanical means, an operation of joining between the flat fins (5,7) will be carried out, within the placement phase of the outer voussoirs (6), after the hoisting operation of the outer voussoirs (6), by mechanical means.
